(19) **Europäisches Patentamt / European Patent Office / Office européen des brevets**

(11) **EP 3 675 350 B1**

(12) **EUROPEAN PATENT SPECIFICATION**

(45) Date of publication and mention
of the grant of the patent:
**11.01.2023 Bulletin 2023/02**

(21) Application number: **19219132.8**

(22) Date of filing: **20.12.2019**

(51) International Patent Classification (IPC):
*H02P 8/04* *(2006.01)*     *H02P 8/30* *(2006.01)*
*H02P 8/38* *(2006.01)*     *H02P 1/02* *(2006.01)*

(52) Cooperative Patent Classification (CPC):
**H02P 8/04; H02P 1/029; H02P 8/30; H02P 8/38**

(54) **A METHOD FOR CONTROLLING A STEP MOTOR**

VERFAHREN ZUR STEUERUNG EINES SCHRITTMOTORS

PROCÉDÉ DE COMMANDE D'UN MOTEUR PAS-À-PAS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2018 CN 201811581410**
**24.12.2018 CN 201811581411**

(43) Date of publication of application:
**01.07.2020 Bulletin 2020/27**

(73) Proprietor: **Zhejiang University**
**Hangzhou, Zhejiang 310058 (CN)**

(72) Inventors:
• **Wu, Lijian**
**Hangzhou, ZheJiang (CN)**
• **Zhu, Liang**
**HangZhou, ZheJiang (CN)**
• **Fang, Youtong**
**HangZhou, ZheJiang (CN)**
• **Zhu, Jiabei**
**HangZhou, ZheJiang (CN)**
• **DU, Yidong**
**HangZhou, ZheJiang (CN)**
• **Zhang, Liu**
**HangZhou, ZheJiang (CN)**

(74) Representative: **Huang, Liwei**
**Cäcilienstraße 12**
**40597 Düsseldorf (DE)**

(56) References cited:
**US-A- 4 218 643**     **US-A- 5 274 316**
**US-B1- 6 373 209**

**Description**

**FIELD OF THE INVENTION**

The present invention relates to a method for controlling a step motor, in particular to a method for controlling the stability of a rotor and preventing an out-of-step of motor during the working process of step motor.

**BACKGROUND**

A step motor is an open-loop control motor that converts electric pulse signals into angular displacement or linear displacement. It is a main executive element in modern digital program control systems and is extensively used. Under non-overload conditions, the speed and stop position of a motor only depend on the frequency of pulse signals and number of pulses and are not affected by the load change. When a step driver receives a pulse signal, it drives the step motor to rotate a fixed angle (called step angle) according to a designated direction. Its rotation runs step by step at a fixed angle. The angular displacement can be controlled by controlling the number of pulses, so as to achieve accurate positioning. In addition, the speed and acceleration of the motor can be controlled by controlling the pulse frequency, to achieve the purpose of speed-regulating.

Because of extensive applications of step motor, there are more and more researches on the control of step motor. When starting or accelerating, if the step pulses change too fast, the rotor cannot keep up with the change of the electric signal due to inertia, which results in stalling or out-of-step. When stopping or decelerating, the change of the power signal due to inertia may cause an over-step. In order to prevent stalling, out-of-step and over-step and increase the working frequency, it is necessary to implement control of speed-up and speed-down of the step motor.

The starting frequency characteristic makes it impossible for a step motor to directly reach the operating frequency when starting, but it requires a starting process, that is, gradually increase the speed from a low speed to an operating speed. When stopping, the operating frequency cannot be reduced to zero immediately, but reduced gradually from a high speed to zero.

The output torque of a step motor decreases with the increase of the pulse frequency, the higher the starting frequency, the smaller the starting torque, and the worse the ability to drive the load. When starting, it will cause an out-of-step, and when stopping, overshoot may occur. In order to make the step motor to quickly reach the required speed without out-of-step or overshoot, the key is to make the torque required by the acceleration during the acceleration process fully utilize the torque provided by the step motor at all operating frequency, but not exceed this torque. Therefore, the operation of a step motor generally needs to go through three phases: acceleration, constant speed and deceleration. The acceleration and deceleration processes should be short as much as possible, and the constant speed process should be long as much as possible, especially in the work that requires fast response, the operating time from the start point to the end point should be shortest, thus, the acceleration and deceleration processes should be shortest and the speed should be highest in the constant speed process.

There is an out-of-step solution for a step motor, which is mainly to compensate the number of lost steps after out-of-step of the step motor. It is required to add a complex detection statistical system to determine whether the step motor is out-of-step and count the number of lost steps. Another solution to prevent out-of-step of a step motor is to solve the control of acceleration and deceleration during the start and stop of the step motor to ensure that the electromagnetic torque can drive the load torque, but it does not consider the impact of rotor vibration on the out-of-step.

For the frequent starting and stopping (holding) of the step motor, especially when the step motor is in a holding state between twice running, the rotor is prone to vibrate repeatedly at the back and forth of the holding position affected by the previous running inertia. If the holding state lasts for a short time and the rotor vibration cannot be completely attenuated, it will affect the subsequent starting performance of the step motor. At present, the control method of the step motor in the holding phase is generally that the working phase is energized and the non-working phase is disconnected. This control method can avoid out-of-step of the step motor under a rated power. However, when the load driven by the step motor exceeds its rated design, or when more complex conditions happen, its stability will decline and the speed of rotor vibration attenuation cannot meet the requirements of the step motor to start from the equilibrium position at zero speed, which will cause out-of-step of the step motor and affect the motor performance.

Some methods for controlling a step motor in prior arts can be found in US 6373209B1, US 4218643A1, US 5274316A1, etc. For example, US 6373209B1 discloses a stepping motor with an electrical activation circuit for electrical control of its exciter windings, wherein one or two exciter windings 45a and 45b are short circuited, to brake a stepping motor, as shown in Fig. 3 of US 6373209B1.

**SUMMARY**

The object of the present invention is that even if the rotor has not completely realized vibration attenuation in the holding phase, the motor is not out-of-step when the rotor enters from the holding phase to the startup phase.

The present invention provides a method for controlling a step motor as defined in our claim 1, as well as some advantageous embodiments in dependent claims.

Methods for controlling a step motor includes startup phase, rated operation phase, speed-down phase and holding phase (or stalling), and then repeats the process of startup-rated operation -speed-down- holding (or stalling). For a step motor that require frequent starting and stopping, the four phases are continuously cyclically performed.

In an embodiment, an object is to control the step motor in the holding phase and effectively accelerate the vibration attenuation of the step motor rotor, to solve the problem of out-of-step of the step motor.

A method for controlling a step motor, wherein at least one phase winding has a short circuit state in the holding phase of a step motor. It is during the entire holding phase short-circuited, or intermittently short-circuited. The both situations belong to a short circuit state of the phase winding.

In the step motor holding phase (that is, the step motor is energized but does not rotate, waiting for the next rotation instruction), short-circuit control to phase winding is adopted. The phase winding short-circuit causes the motor rotor to generate back-EMF when vibrating and generates current in the short-circuit loop, which generates a torque that prevents the motor from rotating. A part of vibration energy in the holding phase is consumed in the rotor friction damping, and a part is consumed in the short-circuit loop, thereby speeding up the vibration attenuation of the rotor and shortening the time of rotor from non-zero speed to zero speed.

The step motor is classified into two-phase winding step motor and multiple-phase winding step motor. The control method is further defined as: the control method of a step motor in the holding phase is that at least one phase winding is short-circuited. Preferably, for all phases other than the working phase, short-circuit control to phase winding is adopted.

That is, in the holding phase, one phase winding is short-circuited, or several phase windings are short-circuited, or all phases other than the working phase are controlled by using short-circuit control to phase winding. All these methods can achieve rapid vibration attenuation of rotor.

As a preferred solution, an H-bridge inverter is used to power the step motor. The short-circuit control method of the phase winding is to connect two power tubes of the upper bridge arm of the phase winding and disconnect two power tubes of the lower bridge arm of the phase winding; or, to disconnect two power tubes of the upper bridge arm of the phase winding and connect two power tubes of the lower bridge arm of the phase winding.

H-bridge inverter can use its own short-circuit loop to achieve phase winding short circuit. The phase winding resistance, cable resistance and the on-resistance of two power tubes in the circuit are summed to obtain the total resistance of the entire short-circuit loop, which consumes the electric energy induced by rotor vibration.

Preferably, in the process of controlling the short circuit of the phase winding, the short circuit current is detected in real time, and when the detected short circuit current exceeds the maximum allowable current value, the phase winding is intermittently short-circuited.

When the back-EMF generated by the rotor vibration is larger, the corresponding short circuit current is larger. When the short circuit current exceeds the rated current of the motor, in order to avoid damage to the motor, the phase winding cannot continuously withstand an excessively large short circuit current. Therefore, intermittent short circuit is adopted to make the phase winding to keep circulation between short circuit and open circuit (O/C), similar to cadence braking.

Preferably, hysteresis control of short-circuit current is implemented, to limit the short-circuit current to the maximum current allowed by the phase winding or power device.

The object of the present invention is to provide a method for controlling the step motor during startup phase that is not out-of-step in the next starting even if the rotor vibration is not completely attenuated during the holding phase or the rotor does not reach the equilibrium position during the last stop or holding.

A method for controlling a step motor in the startup phase, wherein the step motor is controlled in the startup phase, and the step motor rotor performs the following operations during dynamic startup: setting a start frequency and calculating the load torque $T_L$ of the step motor at the time of static starting in the equilibrium position; the effect of the initial speed being equivalent to the initial speed equivalent load torque $T_{L1}$, $T_{L1} = -J\omega_0/t_1$, where J is the rotational inertia, $\omega_0$ is the initial angular speed of the rotor, and $t_1$ is the time consumed from the initial position (the last equilibrium position) to a new equilibrium position;

And/or the effect of the initial position is equivalent to the equivalent load torque $T_{L2}$ of the initial position, $T_{L2}=T_L\theta_0/\theta_{step}$, where $\theta_0$ represents the initial position angle of the rotor and $\theta_{step}$ represents the mechanical angle corresponding to one step of the motor;

The total equivalent static load TL' during dynamic start at the initial speed $\omega_0$ and initial position $\theta_0$ is calculated, $T_L'=T_L+T_{L1}+T_{L2}$, and the step motor is started at the total equivalent static load under this frequency.

Preferably, the current initial position $\theta_0$ of the rotor and/or the initial speed $\omega_0$ are obtained through a rotor encoder of a step motor. Preferably, when the initial speed $\omega_0$ is not given by the rotor encoder directly, the initial speed is obtained by calculating derivative of the initial position.

When the initial speed $\omega_0 = 0$, the equivalent load torque of the initial speed is zero. When the initial position $\theta_0 = 0$ (that is, the initial position is in a equilibrium position), the equivalent load torque of the initial speed is zero.

In an embodiment of the present invention, the control method of the startup phase proposed in the second aspect can be used to quantitatively analyze the startup capability of a step motor.

A method for quantitatively analyzing the starting capability of a step motor, comprising the following steps: obtaining the maximum static starting torque of the step motor at different starting frequencies, plotting a static torque-frequency characteristic curve of the motor at the current frequency, and obtaining the initial speed $\omega_0$ of the rotor and the total equivalent static load $T_L'$ at dynamic start in the state of position $\theta_0$, $T_L' = T_L + T_{L1} + T_{L2}$, $T_L$ represents the load torque when the rotor is statically started at the equilibrium position, and $T_{L1}$ represents equivalent load torque of the initial speed of the rotor starting from the equilibrium position when the initial speed is not zero, $T_{L2}$ represents the equivalent load torque of the initial speed of the rotor starting from an initial position deviating from the equilibrium position when the initial speed is zero. According to the current starting frequency of the step motor and the static torque-frequency characteristic curve, the maximum startable static torque at this starting frequency is obtained. The total equivalent static load torque curve is compared with the maximum startable static torque, if the maximum value of the total equivalent static load torque curve is less than the maximum startable static torque, the motor can be started normally at the current frequency; and if the maximum value of the total equivalent static load torque curve is greater than the maximum startable static torque, a motor start failure alarm is issued.

Preferably, the maximum static starting torque can be obtained by using the existing technologies, for example, a method for testing the maximum static starting torque: applying a rated drive with a specified starting frequency to a step motor, and performing static start tests for many times with an initial speed of zero and an initial position at the equilibrium position. During each static start, the load of the motor is gradually increased, and the maximum load that the step motor can drive at this start frequency is determined and recorded as the maximum static starting torque. Rated drive is to keep the motor at the rated speed and output power and give the rated current and pulse frequency. Rated drive requires the current and pulse to reach their respective rated values.

The present invention provides a control method of simultaneously controlling the holding phase and the startup phase for a step motor that is frequently started and stopped, to reduce the risk of out-of-step and enhance the performance of the motor.

A method for controlling a step motor, wherein the method includes the following operations: adopting a short-circuit control to phase winding in the holding phase; obtaining the initial speed $\omega0$ and the initial position $\theta0$ for starting the rotor in the startup phase, and calculating the load torque $T_L$ of the step motor at static start in the equilibrium position, and the effect of the initial speed being equivalent to initial speed equivalent load torque $T_{L1}$, and the effect of the initial position being equivalent to initial position equivalent load torque $T_{L2}$, to obtain the total equivalent static load $T_L'$ for motor starting, $T_L' = T_L + T_{L1} + T_{L2}$; starting the step motor at this frequency with the total equivalent static load.

As a preferred solution, the initial speed equivalent load torque, the initial position equivalent load torque and the load torque of the step motor at static start in the equilibrium position are calculated in the step motor controller, or calculated in a remote terminal and then the calculation results are input into the step motor controller.

As an inventive solution, according to the current starting frequency of the step motor and the static torque-frequency characteristic curve, the maximum startable static torque at this starting frequency is obtained. The total equivalent static load torque curve is compared with the maximum startable static torque, if the maximum value of the total equivalent static load torque curve is less than the maximum startable static torque, the motor can be started normally at the current frequency; and if the maximum value of the total equivalent static load torque curve is greater than the maximum startable static torque, a motor start failure alarm is issued.

The specific short-circuit control in the holding phase and the specific control in the startup phase are described as above.

## Advantages of the present invention

In the present invention, by adopting a short-circuit strategy for the phase windings in the step motor holding phase, the rapid attenuation of rotor oscillations is achieved. Compared with the control method of energizing the working phase and open circuit (short circuit) of the non-working phase, the invention can quickly and effectively attenuate the rotor vibration and improve the operating stability of step motor. For motors that require frequent starting and stopping, only a short time interval (holding time) is required to reduce the out-of-step caused by rotor vibration when the step motor starts.

When the step motor is started, the initial position may deviate from the equilibrium position and the initial speed is not zero. The initial position effect is equivalent to initial position equivalent load torque, and the initial speed effect is equivalent to initial speed equivalent load torque. When starting, the initial position equivalent load torque and initial speed equivalent load torque are compensated to obtain the total equivalent static load which is used as a static starting torque of the step motor, that is, the condition when the initial position may deviate from the equilibrium position and the initial speed is not zero is equivalent to the condition when the initial position is in the equilibrium position and the initial speed is zero, to solve the out-of-step of the step motor in the startup phase.

When the step motor is started, the actual starting capacity of the step motor is predicted based on the total equivalent static load, to judge if the step motor can be started normally, and give an early warning when the step motor cannot be started normally.

The joint control of the holding phase and startup phase enables the rotor to start at zero speed from the equilibrium position as much as possible; even if there is a deviation, the position deviation and the initial speed deviation are minimized, to enhance the dynamic starting ability of the step motor and guarantee the normal operation of the step motor, without out-of-step.

## BRIEF DESCRIPTION OF THE DRAWINGS

FIG. 1 is a control block diagram for controlling in the holding phase.

FIG. 2 is a schematic diagram in which a phase H bridge is a common point of phase windings.

FIG.3 is a schematic diagram showing the current change of a double-phase step motor when the working phase is energized and the non-working phase is in open-circuit (O/C) control in the holding phase.

FIG.4 is a schematic diagram showing the current change of a double-phase step motor with short-circuit control of each phase winding in the holding phase.

FIG.5 is a schematic diagram showing the current change of a double-phase step motor when the working phase is energized and the non-working phase is in short-circuit control in the holding phase.

FIG.6 is a schematic diagram of the equivalent load torque for dynamic start of a single-phase half-current holding dynamic response.

FIG.7 is a schematic diagram showing judgment of dynamic starting capability of a step motor when the starting frequency is 1kHZ.

FIG.8 is a schematic diagram showing judgment of dynamic starting capability of a step motor when the starting frequency is 333HZ.

FIG. 10 is static starting torque-frequency characteristic curve of a step motor.

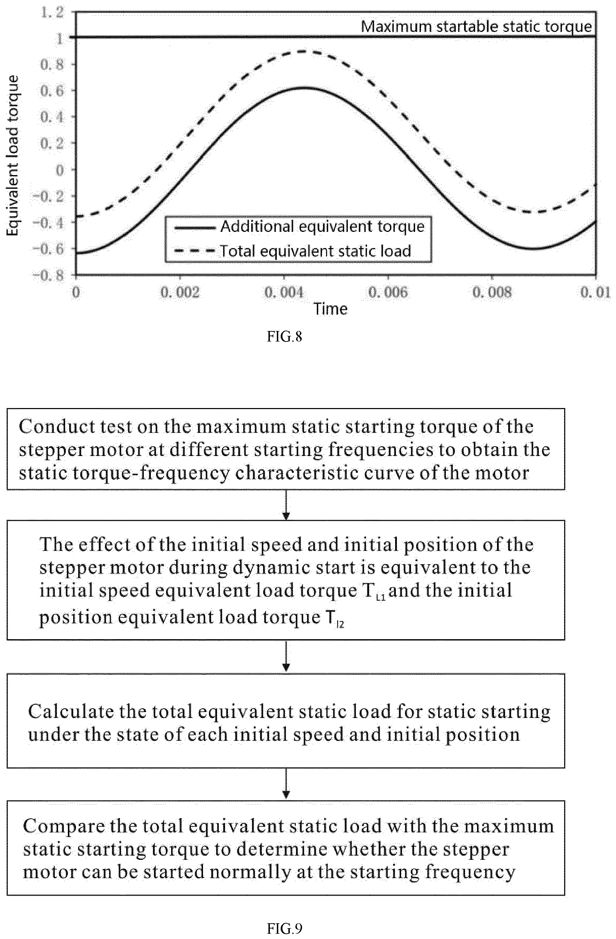

FIG. 9 is a flowchart for quantitatively analyzing the starting capability of a step motor.

## DETAILED DESCRIPTION OF THE EMBODIMENTS

The present invention is further described in conjunction with the figures.

The control of a step motor includes startup phase, rated operation phase, speed-down phase and holding phase (or stalling), and then repeats the process of startup-rated operation -speed-down- holding (or stalling). For a step motor that require frequent starting and stopping, the four phases are continuously cyclically performed.

### Control of step motor in holding phase

The purpose of control of holding phase is to control the step motor in the holding phase and effectively accelerate the vibration attenuation of the step motor rotor, to solve the problem of out-of-step of the step motor.

A method for controlling a step motor in the holding phase, wherein a phase winding short-circuit control is used in the holding phase of the step motor. This control method is applicable to two-phase step motors and multi-phase step motors with more than two phases.

In some embodiments, taking a double-phase step motor as an example, the control method of the holding phase should not be limited to the double-phase step motor.

Before starting a double-phase step motor, the operation plan is set: the step motor advances 121 steps, and then enters the holding phase of the single-phase by direct shutdown, and then the step motor is restarted to advance 121 steps to directly stop and cut off the power source.

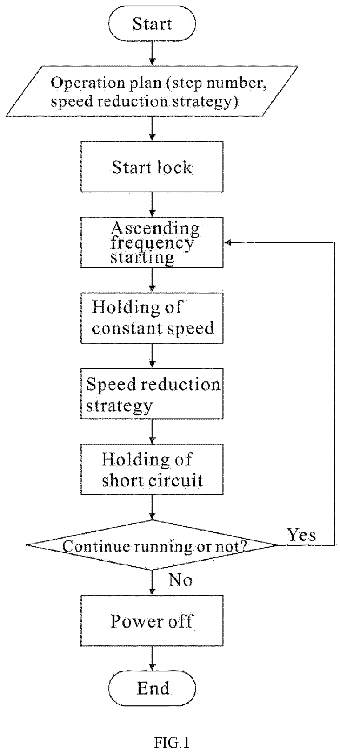

As shown in FIG. 1, after the step motor is powered on and started, a holding current is applied at first, so that the step motor can lock the rotor position at a given position. In order to make the step motor from zero speed to a rated speed and have enough time to act on a load, an ascending frequency startup strategy is adopted for the step motor, so that the step motor has a greater load capacity. The rated step frequency of the step motor is 1kHz, the time for the first step of ascending frequency startup of the step motor is 3ms, the time for the second step is 2ms, and the time for the third step is 1ms, then the step motor enters a rated speed running state. The step motor adopts direct shutdown in the speed-down phase, and relative to the descending frequency shutdown strategy, it is characterized by fast shutdown and simple control. However, the use of a direct shutdown strategy will cause control instability and increase the rotor vibration, leading to the risk of out-of-step. Therefore, in the holding phase after the speed reduction, a short-circuit strategy of each phase winding is adopted to achieve rotor vibration. The step motor adopts direct shutdown, so the shutdown phase does not require any time and the step motor directly enters the holding phase. In the holding phase, each phase of the step motor adopts a way of lower bridge arm short circuit, to accelerate the vibration attenuation of the step motor.

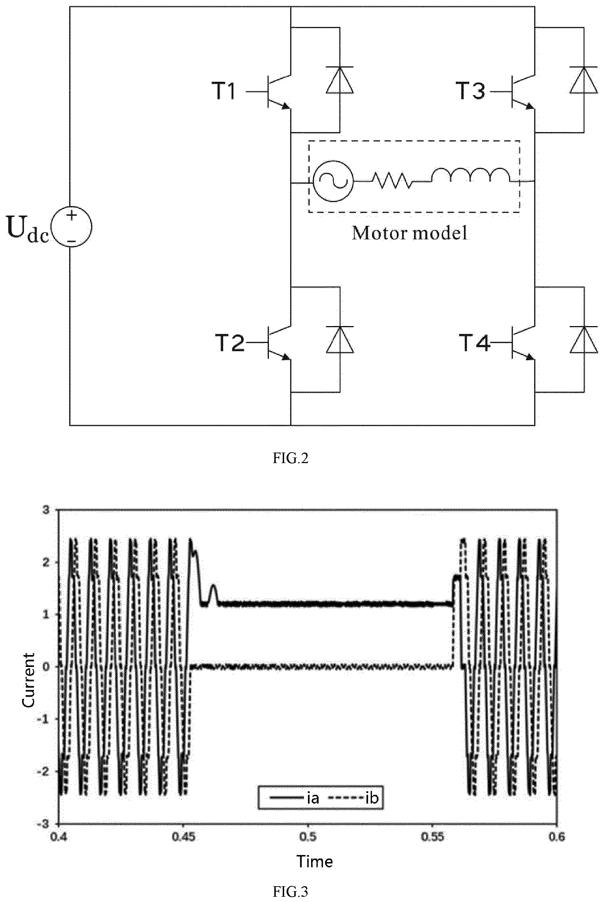

FIG.2 is a schematic diagram of H-bridge power supply for one phase of the double-phase step motor. Of which, the dashed box is the step motor model, and from left to the right, it is the phase back-EMF, phase resistance, and phase inductance of the step motor. T1, T2, T3, and T4 are four driving devices of H-bridge driving circuit respectively, and the devices include IGBTs and diodes in parallel, or MOSFETs and diodes in parallel.

When the step motor enters the holding state from the running state, the step motor controller short-circuits all phase windings through hysteresis control (or controls the working-phase current to the holding current and controls short-circuit of non-working-phase).

Taking the windings of non-working phase (such as phase B) as an example, the process of controlling the phase winding short circuit is as follows: T1 and T3 on the B-phase H-bridge driver obtain the controller ON signal to continuously ON, and T2 and T4 obtain the controller OFF signal to keep OFF. In the short-circuit phase, the current in phase B is continuously flowed through a diode and an IGBT of T1 and T3. The electromagnetic torque generated by the short-circuit current hinders the operation and causes the motor to stop quickly. If the current of the phase B is detected too large when short-circuit of phase B, which is greater than the phase current or the maximum current allowed by the driver, then the phase B1 and T3 will obtain the controller open circuit signal when the current is too large, the short-circuit loop of the motor, T1 and T2 is disconnected to prevent excessive short-circuit current. When short-circuit current drops, T1 and T3 obtain the controller ON signals, the short-circuit loop of the motor, T1 and T2 is connected. For the phase B short-circuit current, the controller adopts hysteresis control. By controlling the ON/OFF of T1 and T3, the short-circuit current is controlled.

In the following, the two-phase current changes when the working phase (phase A) is energized, the non-working phase (phase B) is disconnected and the short circuit of each phase are compared in the holding phase.

As shown in FIG.3, when the working phase (phase A) is energized and the non-working phase (phase B) is disconnected, there is no current in the phase B, while phase A will have a current peak after the holding phase, which is caused by back-EMF on phase A generated due to excessive rotor vibration, leading to increased current of phase A, which is disadvantageous for the driver and DC bus, etc.

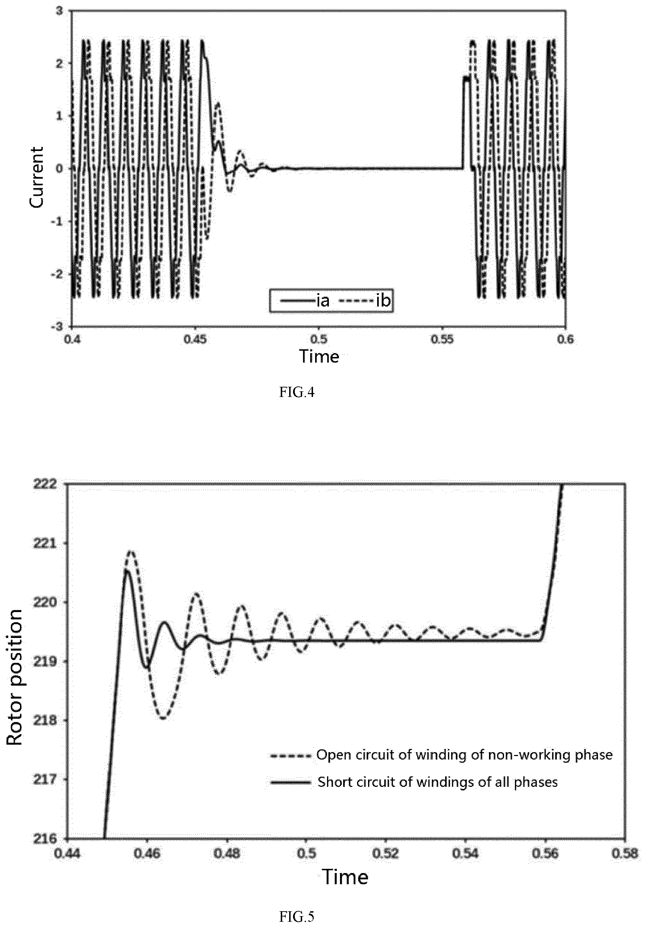

As shown in FIG. 4, after each phase is in short-circuit control by the disclosure, there is current flowing in phases A and B. When rotor vibration, an induced electromotive force is generated on the windings of phases A and B, and an induced current is generated. Therefore, the oscillations of the currents on the phases A and B are consistent with the rotor vibration, and this current hinders the movement of rotor, making quick vibration attenuation of the rotor.

FIG.5 compares the method of energizing the working phase and disconnecting the non-working phase with the method of short circuit control to all phases, when the step motor is in the holding phase. It can be clearly seen that, under the same condition, when using the method of short circuit control to all phases, the step motor has a small vibration amplitude and a fast attenuation and a short time to stabilize. The use of a short-circuit strategy is equivalent to adding an electromagnetic damping to the step motor after deceleration in the holding phase.

The step motor can be started directly, and a rated operating frequency is applied to achieve fast start of the motor. In order to ensure that the step motor has sufficient starting capacity, the ascending frequency startup can be used. The first step of the step motor has the longest action time, and the action time is gradually reduced in the second step until the motor is gradually in a rated speed.

When the step motor is in rated operation, a corresponding frequency-switching drive signal is applied according to the operating speed.

In the step motor speed-down phase, if the load on the step motor is small and the speed is low, the step motor can directly enter the holding phase, that is, choose to stop directly, and stop the rotation by maintaining the torque and rapid vibration attenuation in the holding phase. If the step motor has a large load and a high speed, which is impossible to directly enter the holding phase of the step motor to achieve stop without out-of-step, the frequency can be reduced to enter holding phase of the step motor to stop, and the phase-switching frequency of the driver decreases from high to low, and the action time of each step is increased gradually, to achieve stop of the motor.

The step motor holding phase, which is directly behind the speed-down phase, is mainly to implement the lock-holding functions of the step motor. Because the present disclosure adopts a phase short circuit strategy in the holding phase, it can accelerate the rotor vibration attenuation of the step motor from speed-down phase to holding phase, improve the operating stability of the motor, and can achieve the requirement of restarting in a short time.

In some embodiments, in the process of controlling the short circuit of the phase winding, the short circuit current is detected in real time, and when the detected short circuit current exceeds the maximum allowable current value, the phase winding is intermittently short-circuited.

When the back-EMF generated by the rotor vibration is larger, the corresponding short circuit current is larger.

When the short circuit current exceeds the rated current of the motor, in order to avoid damage to the motor, the phase winding cannot continuously withstand an excessively large short circuit current. Therefore, intermittent short circuit is adopted to make the phase winding to keep circulation between short circuit and open circuit (O/C), similar to cadence braking.

Hysteresis control of short-circuit current is implemented, to limit the short-circuit current to the maximum current allowed by the phase winding or power device. The current hysteresis control process is as follows: when the switch is closed, the current gradually increases; when the current is detected to reach the upper limit, the switch is turned off and the current decreases. When the current drops to the lower limit, the switch is turned on again, the current increases. Repeat this cycle.

**Control of step motor in startup phase**

The object of the startup phase is to provide a method for controlling the step motor during startup phase that is not out-of-step in the next starting even if the rotor vibration is not completely attenuated during the holding phase or the rotor does not reach the equilibrium position during the last stop or holding.

A method for controlling a step motor in the startup phase according to the invention, wherein the step motor rotor performs the following operations during dynamic startup: setting a start frequency and calculating the load torque $T_L$ of the step motor at the time of static starting in the equilibrium position; the effect of the initial speed being equivalent to the initial speed equivalent load torque $T_{L1}$, $T_{L1} = -J\omega_0/t_1$, where J is the rotational inertia, $\omega_0$ is the initial angular speed of the rotor, and $t_1$ is the time consumed from the initial position (the last equilibrium position) to a new equilibrium position;

And the effect of the initial position is equivalent to the equivalent load torque $T_{L2}$ of the initial position, $T_{L2} = T_L\theta_0/\theta_{step}$, where $\theta_0$ represents the initial position angle of the rotor and $\theta_{step}$ represents the mechanical angle corresponding to one step of the motor;

The total equivalent static load TL' during dynamic start at the initial speed $\omega_0$ and initial position $\theta_0$ is calculated, $T_L' = T_L + T_{L1} + T_{L2}$, and the step motor is started at the total equivalent static load under this frequency.

According to embodiments, the current initial position $\theta_0$ of the rotor and/or the initial speed $\omega_0$ are obtained through a rotor encoder of a step motor. When the initial speed $\omega_0$ is not given by the rotor encoder directly, the initial speed is obtained by calculating derivative of the initial position.

When the initial speed $\omega_0 = 0$, the equivalent load torque of the initial speed is zero. When the initial position $\theta_0 = 0$ (that is, the initial position is in a equilibrium position), the equivalent load torque of the initial speed is zero.

When a step motor implements static starting from the equilibrium position, the starting frequency of the step motor, the load torque $T_L$ and the rotation association J satisfy the following relationship:

$$T_e - T_L = J\frac{d\omega}{dt} \quad \text{(Equation 1)},$$

where, $T_e$ represents the electromagnetic torque of the step motor, $\omega$ represents the angular speed of the step motor.

When a step motor is started from a static state, after the first pulse is applied, the time for the rotor from the initial position to the equilibrium position is $t_1$, the rotation angle is $\theta$, $T_e$ is the electromagnetic torque, and the speed of the rotor increases from 0 to $\omega_1$. According to the law of conservation of angular momentum,

$$\int_0^{t_1} (T_e - T_L)dt = J\omega_1 \quad \text{(Equation 2)};$$

When the step motor is started dynamically, the initial speed of the rotor is not zero. Therefore, the torque-frequency characteristic curve shown in FIG. 2 cannot be directly used to determine whether it can be successfully started. When the step motor is started dynamically, it is assumed that the initial position of the rotor is the same as the initial position during the static start-up test (that is, the equilibrium position), and the initial angular speed of the rotor is $\omega0$. If the motor can be started normally in this state, after the first pulse is applied, the time for the rotor from the initial position (the first position) to the new equilibrium position is $t_1$ and the rotation angle is $\theta$, and the speed of the rotor rises from $\omega_0$ to $\omega_1$, according to the law of conservation of angular momentum:

$$\int_0^{t_1} (T_e' - T_L)dt = J\omega_1 - J\omega_0 \quad \text{(Equation 3)};$$

Combing the Equation 2 and Equation 3, it is obtained $\int_0^{t_1} (T_e' - T_e) dt = -J\omega_0$ (Equation 4); taking the average

value of $T_e' - T_e$ at all times in the interval of 0~$t_1$ from 0 to t1, the average value can be approximately regarded as a constant value, it is defined: $T_{L1} = T_e' - T_e = -J\omega_0/t_1$ (Equation 5) ;

Substituting Equation 5 into Equation 3, it is obtained:

$$\int_0^{t_1}(T_e' - T_L)dt + J\omega_0 = \int_0^{t_1}(T_e' - T_L)dt - \int_0^{t_1}T_{L1}dt = \int_0^{t_1}[T_e' - (T_L + T_{L1})]dt = J\omega_1 \quad \text{(Equation 6);}$$

Substituting

$T_{L1} = T_e' - T_e$ into Equation 6, the result obtained is consistent with that of Equation 2. Thus, it can be known that, when the initial position of the rotor is the same as the initial position for the static start test, the total equivalent static load can be approximately equivalent to the sum of the load torque $T_L$ of the motor and the initial speed equivalent load torque $T_{L1}$. The calculation formula is: $T''_L = T_L + T_{L1}$ (Equation 7). Although the initial speed equivalent load torque $T_{L1}$ is not related to the rotation angle of the rotor in Equation 7, the initial angular speed of the rotor varies with the initial position angle of the rotor. If the rotor just passes the equilibrium position in the reverse direction at the time of starting, it has the maximum reverse initial angular speed. At this time, the initial speed equivalent torque $T_{L1}$ is largest and it is difficult to start.

When the initial position of the rotor is different from the initial position for the static start test, it is assumed that the initial position $\theta_0$ of the rotor deviates from the equilibrium position. According to the energy conservation, the equivalent load torque of the initial position needs to be compensated in one compensation: $T_{L2}\theta_{step} = T_L\theta_0$; where, $\theta_{step}$ is a mechanical angle corresponding to the compensation of the motor. Therefore, the initial position equivalent load torque is $T_{L2} = T_L\theta_0/\theta_{step}$ (Equation 9).

In summary, the equivalent starting load torque without the motor is composed of three parts: the load torque $T_L$ at the static start of the motor, the initial speed equivalent load torque $T_{L1}$ affected by the initial speed of the motor, and the initial speed equivalent load torque $T_{L2}$ obtained by influence of motor initial position. The total equivalent static load is calculated by: $T_L' = TL + TL1 + TL2$ (Equation 10).

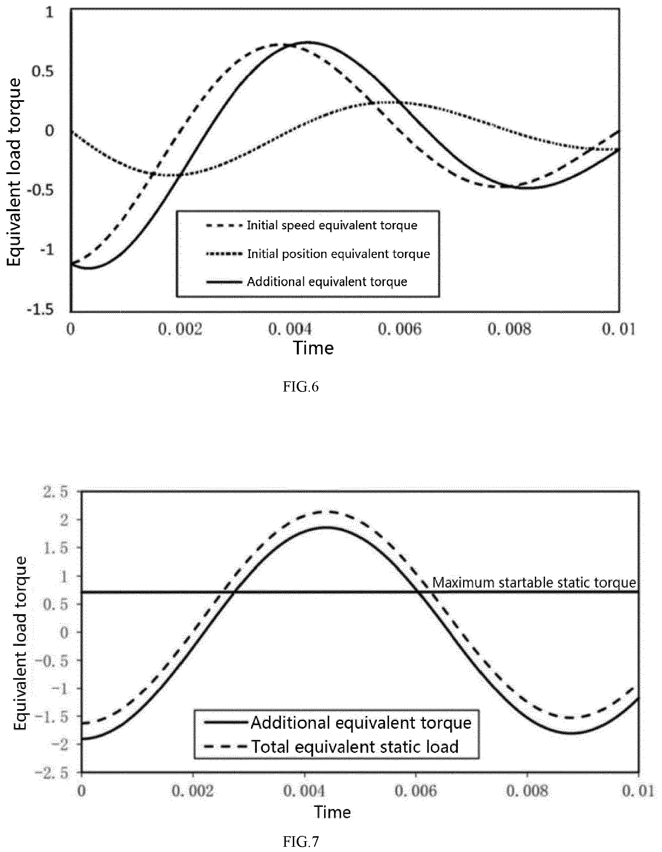

As shown in FIG.6, the additional equivalent torque for dynamic start of single-phase half-current holding dynamic response is given. The additional equivalent torque includes the initial speed equivalent torque and the initial position equivalent torque, and the initial speed equivalent torque differs from the initial position equivalent torque by 90 degrees. Moreover, the initial position equivalent torque is much smaller than the initial speed equivalent torque. Therefore, the amplitude of the combined additional equivalent torque is similar to the equivalent torque of the initial speed, except that the time at which the maximum value appears is slightly delayed. The most difficult point of dynamic start is when the rotor dynamic backlash slightly passes the equilibrium position.

**Method for quantitative analysis of the startup capability of a step motor using the total equivalent static load**

The load that a step motor can drive is constant at a fixed frequency. Under a given starting frequency, the maximum load torque driven by a step motor from zero speed to a rated speed is the maximum static starting torque. When a load torque is greater than the maximum static starting torque at the current starting frequency, the step motor cannot be started normally and an out-of-step problem occurs.

When a step motor is started statically, under the output of an electromagnetic torque Te, the greater the angular acceleration d$\omega$/dt of the rotor (equivalent to the larger the pulse frequency at startup), the smaller the load capacity.

As shown in FIG. 9, a method for quantitatively analyzing the starting capability of a step motor, comprising the following steps: obtaining the maximum static starting torque of the step motor at different starting frequencies, plotting a static torque-frequency characteristic curve of the motor at the current frequency, and obtaining the initial speed $\omega_0$ of the rotor and the total equivalent static load $T_L'$ at dynamic start in the state of position $\theta_0$, $T_L' = T_L + T_{L1} + T_{L2}$, $T_L$ represents the load torque when the rotor is statically started at the equilibrium position, and $T_{L1}$ represents equivalent load torque of the initial speed of the rotor starting from the equilibrium position when the initial speed is not zero, $T_{L2}$ represents the equivalent load torque of the initial speed of the rotor starting from an initial position deviating from the equilibrium position when the initial speed is zero. The maximum value of the total equivalent static load is compared with the maximum static starting torque of the static torque-frequency characteristic curve, and if the former is less than the latter, it is considered that the motor can be started normally; and if not, it is considered that the motor may fail to start.

The maximum static starting torque can be obtained by using the existing technologies, for example, a method for testing the maximum static starting torque: applying a rated drive with a specified starting frequency to a step motor, and performing static start tests for many times with an initial speed of zero and an initial position at the equilibrium position. During each static start, the load of the motor is gradually increased, and the maximum load that the step motor can drive at this start frequency is determined and recorded as the maximum static starting torque.

The results of the torque-frequency characteristic test of the step motor when static starting are shown in Table 1. All data are measured by actual experiments.

Table 1

| Starting frequency (Hz) | Starting torque (N.m) |
|---|---|
| 200 | 1.04125 |
| 333 | 0.99225 |
| 400 | 0.79625 |
| 500 | 0.74725 |
| 600 | 0.74725 |
| 800 | 0.74725 |
| 1000 | 0.69825 |

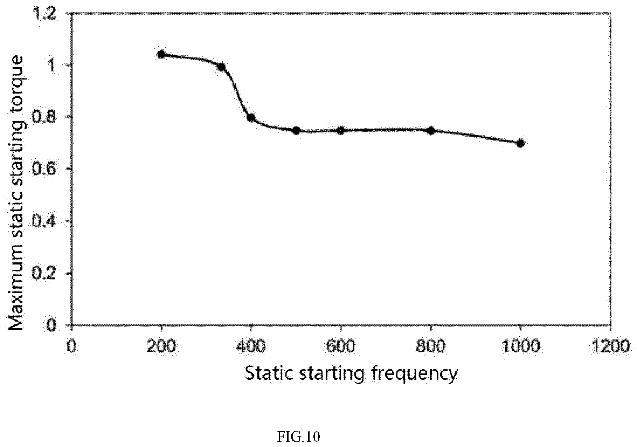

The torque-frequency characteristic curve of the step motor at static starting is drawn according to the data in Table 1. Refer to FIG. 10, it means the maximum load that the step motor can drive when starting from a static state under different starting frequencies.

When the step motor is dynamically started, the initial speed of the rotor is not zero, and the static torque-frequency characteristic curve cannot be directly used to determine whether the step motor can be successfully started. When the step motor is dynamically started, it is assumed that the initial position of the rotor is the same as the initial position during the static start test (i.e., equivalent position), and the effect of the speed on the motor starting capability can be equivalent to a static starting load, which is called initial speed equivalent load torque $T_{L1}$.

The initial angular speed of the rotor varies with the initial position angle of the rotor. If the rotor just passes the equilibrium position in the reverse direction at the time of starting, it has the maximum reverse initial angular speed. At this time, the initial speed equivalent torque $T_{L1}$ is largest and it is most difficult to start.

The initial position of the step motor will also affect its starting ability. First, the amplitude of the dynamic vibration is small compared to the stable region of the torque-angle characteristic of the motor, so the rotor position is within the traction range of the next pulse. However, when the rotor position returns to the equilibrium position, the load torque will also work on the rotor. The effect of this part can also be equivalent to an additional equivalent load torque, which is called initial position equivalent load torque $T_{L2}$.

As shown in FIG.7, when the first pulse is 1ms, it is equivalent to a startup frequency of 1kHz. According to FIG.2, for a starting frequency of 1kHz, the maximum static torque that can be started is 0.7Nm. FIG.7 shows that, within the local range, the total equivalent static load (the dynamic starting additional equivalent torque plus 0.2Nm of load torque) has exceeded 0.7Nm and failure may occur.

As shown in FIG.8, when the first pulse is 3ms, it is equivalent to a starting frequency of 333Hz. According to FIG.5, for a starting frequency of 333Hz, the maximum static torque that can be started is INm. In FIG.8, the maximum dynamic starting additional equivalent torque value is 0.619Nm. Considering the maximum load of 0.28Nm, the final maximum total equivalent static load is 0.899 Nm; therefore, it can be started safely in the entire area.

**Method of step motor control for avoidance of out-of-step**

The present invention provides a control method of simultaneously controlling the holding phase and the startup phase for a step motor that is frequently started and stopped, to reduce the risk of out-of-step and enhance the performance of the motor.

A method for controlling a step motor, wherein the method includes the following operations: adopting a short-circuit control to phase winding in the holding phase; obtaining the initial speed ω0 and the initial position θ0 for starting the rotor in the startup phase, and calculating the load torque $T_L$ of the step motor at static start in the equilibrium position, and the effect of the initial speed being equivalent to initial speed equivalent load torque $T_{L1}$, and the effect of the initial position being equivalent to initial position equivalent load torque $T_{L2}$, to obtain the total equivalent static load $T_L'$ for motor starting, $T_L'=T_L+T_{L1}+T_{L2}$; starting the step motor at this frequency with the total equivalent static load.

The initial speed equivalent load torque and the initial position equivalent load torque are obtained according to the solutions in the present invention.

In some embodiments, the initial speed equivalent load torque, the initial position equivalent load torque and the load torque of the step motor at static start in the equilibrium position are calculated in the step motor controller, or calculated in a remote terminal and then the calculation results are input into the step motor controller.

In some embodiments, the static torque-frequency characteristic curves of the step motor corresponding to various starting frequencies are obtained in advance. According to the present invention, according to the current starting frequency of the step motor, the corresponding static torque-frequency characteristic curves are obtained. The total equivalent static load torque curve is compared with the static torque-frequency characteristic curve, if the maximum value of the total equivalent static load curve is less than the static torque-frequency characteristic curve, the motor is started by the total equivalent static load at the current frequency; and if the maximum value of the total equivalent static load curve is greater than the static torque-frequency characteristic curve, a motor start failure alarm is issued.

The technical solutions and beneficial effects of the present invention are described in the foregoing embodiments in details. It should be understood that the above descriptions are only the specific embodiments of the present invention and are not intended to limit the present invention.

**Claims**

1. Method for controlling a step motor, wherein at least one phase winding has a short circuit state in the holding phase of the step motor;
during a startup phase, wherein when the the step motor is started, an initial speed of the rotor is not zero or/and an initial position deviates from an equilibrium position, the method comprises controlling the step motor to perform following operations:

   setting a start frequency;
   calculating a total equivalent static load $T_L'$ at an initial speed $\omega_0$ and an initial position $\theta_0$ by $T_L'=T_L+T_{L1}+T_{L2}$,

   wherein $T_L$ is a load torque of the step motor at the time of static starting in an equilibrium position; an effect of the initial speed is equivalent to an initial speed equivalent load torque $T_{L1}$, $T_{L1} = -J\omega_0/t_1$, where J is a rotational inertia, and $t_1$ is the time consumed from the initial position to a new equilibrium position, and an effect of the initial position is equivalent to an equivalent load torque $T_{L2}$ of the initial position, $T_{L2}=T_L\theta_0/\theta_{step}$, where $\theta_0$ represents an initial position angle of the rotor and $\theta_{step}$ represents a mechanical angle corresponding to one step of the motor; and

   according to the current starting frequency of the step motor and a static torque-frequency characteristic curve, obtaining the maximum startable static torque at the current starting frequency;
   comparing a total equivalent static load torque curve with the maximum startable static torque at the current starting frequency, wherein the total equivalent static load torque curve is obtained by calculating total equivalent static loads at different time points, by using the initial speed and initial position at each time point;
   if the maximum value of the total equivalent static load torque curve is less than the maximum startable static torque, starting the step motor at the total equivalent static load $T_L'$ at the current frequency; and if the maximum value of the total equivalent static load torque curve is greater than the maximum startable static torque, a motor start failure alarm is issued.

2. Method for controlling a step motor according to claim 1, wherein the control method of the step motor in the holding phase is that at least one phase winding is short-circuited.

3. Method for controlling a step motor according to claim 2, wherein: for all phases other than the working phase, short-circuit control to phase winding is adopted; or in the holding phase, all the phase windings are under short-circuit control.

4. Method for controlling a step motor according to claim 1, wherein: an H-bridge inverter is used to power the step motor, the short-circuit control method of the phase winding is to connect two power tubes of the upper bridge arm of the phase winding and disconnect two power tubes of the lower bridge arm of the phase winding; or, to disconnect two power tubes of the upper bridge arm of the phase winding and connect two power tubes of the lower bridge arm of the phase winding.

**5.** Method for controlling a step motor according to claim 4, wherein in the process of controlling the short circuit of the phase winding, the short circuit current is detected in real time, and when the detected short circuit current exceeds the maximum allowable current value, the phase winding is intermittently short-circuited.

**6.** Method for controlling a step motor according to claim 5, wherein hysteresis control of short-circuit current is implemented, to limit the short-circuit current to the maximum current allowed by the phase winding or power device.

**7.** Method for controlling a step motor according to claim 1, wherein: the current initial position $\theta_0$ of the rotor and/or the initial speed $\omega_0$ are obtained through a rotor encoder of a step motor.

**8.** Method for controlling a step motor according to claim 7, wherein: when the initial speed $\omega_0$ is not given by the rotor encoder directly, the initial speed is obtained by calculating derivative of the initial position.

**9.** Method for controlling a step motor according to claim 1, wherein: the initial speed equivalent load torque, the initial position equivalent load torque and the load torque of the step motor at static start in the equilibrium position are calculated in the step motor controller, or calculated in a remote terminal and then the calculation results are input into the step motor controller.

**Patentansprüche**

**1.** Verfahren zum Steuern eines Schrittmotors, wobei mindestens eine Phasenwicklung in der Haltephase des Schrittmotors einen Kurzschlusszustand aufweist;
während einer Startphase, wobei, wenn der Schrittmotor gestartet wird, eine Anfangsgeschwindigkeit des Rotors nicht null ist oder/und eine Anfangsposition von einer Gleichgewichtsposition abweicht, wobei das Verfahren Steuern des Schrittmotors umfasst, um folgende Operationen durchzuführen:

Einstellen einer Startfrequenz;
Berechnen einer gesamten äquivalenten statischen Last $T_L'$ bei einer Anfangsgeschwindigkeit $\omega_0$ und einer Anfangsposition $\theta_0$ durch $T_L'=T_L+T_{L1}+T_{L2}$,
wobei $T_L$ ein Lastdrehmoment des Schrittmotors zum Zeitpunkt des statischen Startens in einer Gleichgewichtsposition ist; ein Effekt der Anfangsgeschwindigkeit äquivalent zu einem der Anfangsgeschwindigkeit äquivalenten Lastdrehmoment $T_{L1}$ ist, $T_{L1} = -Jco0/ti$, wobei $J$ eine Rotationsträgheit ist und $t_1$ die Zeit ist, die von der Anfangsposition bis zu einer neuen Gleichgewichtsposition verbraucht wird,
und ein Effekt der Anfangsposition äquivalent zu einem äquivalenten Lastdrehmoment $T_{L2}$ der Anfangsposition ist, $T_{L2}=T_L\theta_0/\theta_{step}$, wobei $\theta_0$ einen Anfangspositionswinkel des Rotors darstellt und $\theta_{step}$ einen mechanischen Winkel darstellt, der einem Schritt des Motors entspricht; und
gemäß der aktuellen Startfrequenz des Schrittmotors und einer statischen Drehmoment-Frequenz-Kennlinie, Erhalten des maximal startbaren statischen Drehmoments bei der aktuellen Startfrequenz;
Vergleichen einer gesamten äquivalenten statischen Lastdrehmomentkurve mit dem maximal startbaren statischen Drehmoment bei der aktuellen Startfrequenz, wobei die gesamte äquivalente statische Lastdrehmomentkurve durch Berechnen von gesamten äquivalenten statischen Lasten zu unterschiedlichen Zeitpunkten unter Verwendung der Anfangsgeschwindigkeit und Anfangsposition zu jedem Zeitpunkt erhalten wird;
wenn der Maximalwert der gesamten äquivalenten statischen Lastdrehmomentkurve kleiner als das maximal startbare statische Drehmoment ist, Starten des Schrittmotors bei der gesamten äquivalenten statischen Last $T_L'$ bei der aktuellen Frequenz; und wobei, wenn der Maximalwert der gesamten äquivalenten statischen Lastdrehmomentkurve größer als das maximal startbare statische Drehmoment ist, ein Motorstartfehleralarm ausgegeben wird.

**2.** Verfahren zum Steuern eines Schrittmotors nach Anspruch 1, wobei das Steuerverfahren des Schrittmotors in der Haltephase darin besteht, dass mindestens eine Phasenwicklung kurzgeschlossen wird.

**3.** Verfahren zum Steuern eines Schrittmotors nach Anspruch 2, wobei: für alle Phasen außer der Arbeitsphase eine Kurzschlusssteuerung für die Phasenwicklung angenommen wird; oder in der Haltephase alle Phasenwicklungen unter Kurzschlusssteuerung stehen.

**4.** Verfahren zum Steuern eines Schrittmotors nach Anspruch 1, wobei: ein H-Brücken-Inverter verwendet wird, um den Schrittmotor mit Leistung zu versorgen, das Kurzschlusssteuerverfahren der Phasenwicklung darin besteht, zwei Leistungsröhren des oberen Brückenzweigs der Phasenwicklung zu verbinden und zwei Leistungsröhren des unteren Brückenzweigs der Phasenwicklung zu trennen; oder zwei Leistungsröhren des oberen Brückenzweigs der Phasenwicklung zu trennen und zwei Leistungsröhren des unteren Brückenzweigs der Phasenwicklung zu verbinden.

**5.** Verfahren zum Steuern eines Schrittmotors nach Anspruch 4, wobei im Prozess des Steuerns des Kurzschlusses der Phasenwicklung der Kurzschlussstrom in Echtzeit erfasst wird und, wenn der erfasste Kurzschlussstrom den maximal zulässigen Stromwert überschreitet, die Phasenwicklung intermittierend kurzgeschlossen wird.

**6.** Verfahren zum Steuern eines Schrittmotors nach Anspruch 5, wobei eine Hysteresesteuerung des Kurzschlussstroms implementiert ist, um den Kurzschlussstrom auf den maximalen Strom zu begrenzen, der von der Phasenwicklung oder der Leistungsvorrichtung zugelassen wird.

**7.** Verfahren zum Steuern eines Schrittmotors nach Anspruch 1, wobei: die aktuelle Anfangsposition $\theta_0$ des Rotors und/oder die Anfangsgeschwindigkeit $\omega_0$ durch einen Rotorlagegeber eines Schrittmotors erhalten werden.

**8.** Verfahren zum Steuern eines Schrittmotors nach Anspruch 7, wobei: wenn die Anfangsgeschwindigkeit $\omega_0$ nicht direkt durch den Rotorlagegeber gegeben wird, die Anfangsgeschwindigkeit durch Berechnen einer Ableitung der Anfangsposition erhalten wird.

**9.** Verfahren zum Steuern eines Schrittmotors nach Anspruch 1, wobei: das der Anfangsgeschwindigkeit äquivalente Lastdrehmoment, das der Anfangsposition äquivalente Lastdrehmoment und der Lastdrehmoment des Schrittmotors beim statischen Start in der Gleichgewichtsposition in der Schrittmotorsteuerung berechnet werden oder in einem entfernten Endgerät berechnet werden und dann die Berechnungsergebnisse in die Schrittmotorsteuerung eingegeben werden.

**Revendications**

**1.** Procédé permettant de commander un moteur pas à pas, au moins un enroulement de phase présentant un état de court-circuit dans la phase de maintien du moteur pas à pas ;
durant une phase de démarrage, lorsque le le moteur pas à pas est démarré, une vitesse initiale du rotor n'étant pas nulle ou/et une position initiale s'écartant d'une position d'équilibre, le procédé comprenant la commande du moteur pas à pas pour réaliser les opérations suivantes :

définition d'une fréquence de démarrage ;
calcul d'une charge statique équivalente totale $T_L'$ à une vitesse initiale $\omega 0$ et une position initiale $\theta_0$ par $T_L'=T_L+T_{L1}+T_{L2}$,
$T_L$ étant un couple de charge du moteur pas à pas au moment du démarrage statique dans une position d'équilibre ; un effet de la vitesse initiale étant équivalent à un couple de charge équivalent à la vitesse initiale $T_{L1}$, $T_{L1} = -J\omega_0/t_1$, où J est une inertie de rotation, et $t_1$ est le temps écoulé de la position initiale à une nouvelle position d'équilibre,
et un effet de la position initiale étant équivalent à un couple de charge équivalent $T_{L2}$ de la position initiale, $T_{L2} = T_L\theta_0/\theta_{pas}$, où $\theta_0$ représente un angle de position initiale du rotor et $\theta_{pas}$ représente un angle mécanique correspondant à un pas du moteur ; et
selon la fréquence de démarrage actuelle du moteur pas à pas et une courbe caractéristique couple-fréquence statique, obtention du couple statique maximal permettant le démarrage à la fréquence de démarrage actuelle ;
la comparaison d'une courbe de couple de charge statique équivalente totale avec le couple statique maximal permettant un démarrage à la fréquence de démarrage actuelle, ladite courbe de couple de charge statique équivalente totale étant obtenue en calculant les charges statiques équivalentes totales à différents instants, à l'aide de la vitesse initiale et de la position initiale à chaque instant ;
si la valeur maximale de la courbe de couple de charge statique équivalente totale est inférieure au couple statique maximal permettant le démarrage, démarrage du moteur pas à pas à la charge statique équivalente totale $T_L'$ à la fréquence actuelle ; et si la valeur maximale de la courbe de couple de charge statique équivalente totale est supérieure au couple statique maximal permettant le démarrage, une alarme de défaillance de démarrage du moteur étant émise.

**2.** Procédé permettant de commander un moteur pas à pas selon la revendication 1, ledit procédé de commande du moteur pas à pas dans la phase de maintien étant qu'au moins un enroulement de phase est court-circuité.

**3.** Procédé permettant de commander un moteur pas à pas selon la revendication 2, pour toutes les phases autres que la phase de travail, une commande de court-circuit à l'enroulement de phase étant adoptée ; ou dans la phase de maintien, tous les enroulements de phase étant sous l'effet d'une commande de court-circuit.

**4.** Procédé permettant de commander un moteur pas à pas selon la revendication 1, un onduleur à pont en H étant utilisé pour alimenter le moteur pas à pas, le procédé de commande de court-circuit de l'enroulement de phase étant de raccorder deux tubes de puissance du bras de pont supérieur de l'enroulement de phase et de déconnecter deux tubes de puissance du bras de pont inférieur de l'enroulement de phase ; ou, de déconnecter deux tubes de puissance du bras de pont supérieur de l'enroulement de phase et de connecter deux tubes de puissance du bras de pont inférieur de l'enroulement de phase.

**5.** Procédé permettant de commander un moteur pas à pas selon la revendication 4, dans le processus de commande du court-circuit de l'enroulement de phase, ledit courant de court-circuit étant détecté en temps réel, et lorsque le courant de court-circuit détecté dépasse la valeur de courant admissible maximale, ledit enroulement de phase étant court-circuité par intermittence.

**6.** Procédé permettant de commander un moteur pas à pas selon la revendication 5, une commande par hystérésis du courant de court-circuit étant mise en œuvre, pour limiter le courant de court-circuit au courant maximal autorisé par l'enroulement de phase ou le dispositif de puissance.

**7.** Procédé permettant de commander un moteur pas à pas selon la revendication 1, ladite position initiale actuelle $\theta_0$ du rotor et/ou ladite vitesse initiale $\omega_0$ étant obtenues par un codeur de rotor d'un moteur pas à pas.

**8.** Procédé permettant de commander un moteur pas à pas selon la revendication 7, lorsque la vitesse initiale $\omega_0$ n'est pas donnée directement par le codeur de rotor, ladite vitesse initiale étant obtenue en calculant la dérivée de la position initiale.

**9.** Procédé permettant de commander un moteur pas à pas selon la revendication 1, ledit couple de charge équivalent à la vitesse initiale, ledit couple de charge équivalent à la position initiale et ledit couple de charge du moteur pas à pas au démarrage statique dans la position d'équilibre étant calculés dans le dispositif de commande de moteur pas à pas, ou calculés dans un terminal distant et ensuite lesdits résultats du calcul étant entrés dans le dispositif de commande de moteur pas à pas.

FIG.1

FIG.2

FIG.3

FIG.4

FIG.5

FIG.6

FIG.7

FIG.8

Conduct test on the maximum static starting torque of the stepper motor at different starting frequencies to obtain the static torque-frequency characteristic curve of the motor

The effect of the initial speed and initial position of the stepper motor during dynamic start is equivalent to the initial speed equivalent load torque $T_{L1}$ and the initial position equivalent load torque $T_{L2}$

Calculate the total equivalent static load for static starting under the state of each initial speed and initial position

Compare the total equivalent static load with the maximum static starting torque to determine whether the stepper motor can be started normally at the starting frequency

FIG.9

FIG.10

**EP 3 675 350 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6373209 B1
- US 4218643 A1
- US 5274316 A1